# EUROPÄISCHE PATENTANMELDUNG

(11) **EP 2 214 396 A1**
(43) Veröffentlichungstag der Anmeldung: **04.08.2010**
(21) Anmeldenummer: 09001157.8
(22) Anmeldetag: 28.01.2009
(51) Int. Cl.: H04N 3/15

(54) **Verfahren und Vorrichtung zur Belichtungszeitkorrektur**

(71) Anmelder: Basler AG, 22926 Ahrensburg (DE)
(72) Erfinder: Schmidt, Michael, 23869 Elmenhorst (DE)
(74) Vertreter: Eisenführ, Speiser & Partner

(57) **Zusammenfassung**

Die Erfindung betrifft ein Verfahren zur Belichtungssteuerung für eine zeilensequentielle Bilderfassung eines Objekts, mit den Schritten: Bereitstellen einer Gruppe von Bildsensorelementen mit zumindest einem, vorzugsweise mehreren Bildsensorelementen, Bereitstellen eines Triggersignals, welches einen Startzeitpunkt und einen Endzeitpunkt eines Belichtungsvorgangs der Gruppe von Bildsensorelementen bezeichnet, Bereitstellen eines Auslesetaktes, welcher eine Taktperiode definiert, Abbilden des Startzeitpunkts des Triggersignals auf eine Starttaktperiode, indem der Startzeitpunkt gemäß einer ersten Abbildungsregel solcherart zeitverschoben wird, dass er mit einem Taktbeginn innerhalb des Auslesetakts zusammenfällt, Abbilden des Endzeitpunkts des Triggersignals auf eine Endtaktperiode, indem der Endzeitpunkt gemäß einer zweiten Abbildungsregel solcherart zeitverschoben wird, dass er mit einem Taktende innerhalb des Auslesetakts zusammenfällt, Belichten der Gruppe von Bildsensorelementen mit einer durch die zeitverschobenen Start- und Endzeitpunkte definierten aktuellen Belichtungszeitdauer. Erfindungsgemäß wird vor der Belichtung der Gruppe von Bildsensorelementen die aktuelle Belichtungszeitdauer mit einer vorhergehenden Belichtungszeitdauer eines vorhergehenden Belichtungsvorgangs verglichen, und der Startzeitpunkt und/oder der Endzeitpunkt des Triggersignals auf die Takte des Auslesetakts gemäß einer von der ersten bzw. zweiten verschiedenen dritten Abbildungsregel abgebildet, wenn die aktuelle Belichtungszeitdauer von der vorhergehenden Belichtungszeitdauer in einer vorbestimmten Weise abweicht.

## Beschreibung

Die Erfindung betrifft ein Verfahren zur Belichtungssteuerung für eine zeilensequentielle Bilderfassung eines Objekts, mit den Schritten:
a) Bereitstellen einer Gruppe von Bildsensorelementen mit zumindest einem, vorzugsweise mehreren Bildsensorelementen,
b) Bereitstellen eines Triggersignals, welches einen Startzeitpunkt und einen Endzeitpunkt eines Belichtungsvorgangs der Gruppe von Bildsensorelementen bezeichnet,
c) Bereitstellen eines Auslesetaktes, welcher eine Taktperiode definiert,
d) Abbilden des Startzeitpunkts des Triggersignals auf eine Starttaktperiode, indem der Startzeitpunkt gemäß einer ersten Abbildungsregel solcherart zeitverschoben wird, dass er mit einem Taktbeginn innerhalb des Auslesetakts zusammenfällt,
e) Abbilden des Endzeitpunkts des Triggersignals auf eine Endtaktperiode, indem der Endzeitpunkt gemäß einer zweiten Abbildungsregel solcherart zeitverschoben wird, dass er mit einem Taktende innerhalb des Auslesetakts zusammenfällt,
f) Belichten der Gruppe von Bildserisorelementen mit einer durch die zeitverschobenen Start- und Endzeitpunkte definierten aktuellen Belichtungszeitdauer.

Die Erfindung betrifft weiterhin eine Vorrichtung zur Belichtungssteuerung für eine zeilensequentielle Bilderfassung eines Objekts, umfassend
- eine Gruppe von Bildsensorelementen, umfassend zumindest ein Bildsensorelement,
- eine Auslesevorrichtung zum Auslesen der Gruppe von Bildsensorelementen mit einem Auslesetakt,
- Mittel zum Erfassen eines insbesondere externen Triggersignals, umfassend einen Startzeitpunkt und einen Endzeitpunkt,
- eine Belichtungssteuerungsvorrichtung zur Abbildung des Startzeitpunkt und des Endzeitpunkts auf jeweils eine Starttaktperiode bzw. Endtaktperiode des Auslesetakts nach einer ersten bzw. zweiten Abbildungsregel,

Die Gruppe von Bildsensorelementen kann insbesondere Bildsensorelemente einer Bildsensorzeile umfassen.
Bildsensoren werden im eingangs genannten Verfahren mit einer Auslesetaktfrequenz ausgelesen, wobei der Auslesetakt auch als Pixeltakt bezeichnet wird. Ein Pixel steht dabei für ein strahlungsempfindliches Bildsensorelement einer Bildsensorzeile. Zur Erfassung eines Objekts als Bild mittels eines Bildsensors werden die Bildsensorelemente mit dem von dem Objekt einfallenden Licht belichtet.

Bildsensoren dieser Art werden in bestimmten Anwendungen als Zeilenkamera zur zeilensequentiellen Erfassung eines Objekts eingesetzt. Bei der zeilensequentiellen Erfassung wird ein relativ zum Bildsensor bewegtes Objekt erfasst, indem eine oder mehrere Objektzeilen zu einem ersten Zeitpunkt auf Bildsensorelemente erfasst werden und nach einem Fortschreiten der Relativbewegung wiedrum ein oder mehrere Objektzeilen, nun aus einem teilweise oder vollständig anderen Objektbereich zu einem nachfolgenden von den selben Bildsensorelementen erfasst werden. Diese Vorgang wird mehrfach wiederholt. Die Erfassung muss in diesem Fall synchronisiert zum Fortschreiten der Relativbewegung zwischen Bildsensor Objekt erfolgen. Hierzu wird ein Triggersignal verwendet, welches die Belichtungssteuerung des Bildsensors als externes Signal steuert.

Solche Zeilenkameras werden beispielsweise in der Erfassung von Objekten auf einem Förderband oder dergleichen eingesetzt, um Qualitätssicherungsmaßnahmen oder Fertigunssteuerungsmaßnahmen durchzuführen.

Die Bildqualität existierender Lösungen ist jedoch weiterhin verbesserungsfähig. Beispielsweise treten auch bei den für eine hohe Bildqualität bekannten CCD-Zeilensensoren teilweise deutliche Verschlechterungen der Bildqualität auf, insbesondere bei kurzen Belichtungszeitdauern. Nachteilhaft an dieser Art der zeilensequentiellen Erfassung eines Objekts ist eine Belichtungsschwankung, die einen jalousienartigen Belichtungsfehler bewirkt.

Es ist daher die Aufgabe der vorliegenden Erfindung, ein Verfahren und eine Vorrichtung zur Belichtungssteuerung für eine zeilensequenzielle Bilderfassung eines Objekts bereitzustellen, bei dem/der die Belichtungsschwankung reduziert oder idealerweise verhindert wird.

Diese Aufgabe wird erfindungsgemäß durch ein Verfahren der eingangs genannten Art gelöst, das dadurch gekennzeichnet ist, dass
g) vor der Belichtung der Gruppe von Bildsensorelementen die aktuelle Belichtungszeitdauer mit einer vorhergehenden Belichtungszeitdauer eines vorhergehenden Belichtungsvorgangs verglichen wird, und
h) der Startzeitpunkt und/oder der Endzeitpunkt des Triggersignals auf die Takte des Auslesetakts gemäß einer von der ersten bzw. zweiten verschiedenen dritten Abbildungsregel abgebildet wird/werden, wenn die aktuelle Belichtungszeitdauer von der vorhergehenden Belichtungszeitdauer in einer vorbestimmten Weise abweicht.

Der erfindungsgemäßen Lösung liegt die Erkenntnis zugrunde, dass die verschlechterte Bildqualität auf Helligkeitsunterschieden beruht, die durch Schwankungen in der Belichtungszeitdauer verursacht sind. Das externe Triggersignal ist nicht vollständig zeitkongruent mit dem internen Auslesetakt des Bildsensors. Das externe Belichtungssignal muss daher auf den internen Auslesetakt abgebildet werden, was einer Quantisierung entspricht. Hierdurch ergeben sich regelmäßig kleinere zeitliche Verschiebungen des Starts und des Endes des Triggersignals, was als Quantisierungsfehler einen Belichtungsfehler verursachen kann. Die Belichtung erfolgt mit einer mit dem internen Auslesetakt synchronisierten Belichtungszeitdauer, wobei sich externes Triggersignal und interner Auslesetakt als Schwebung überlagern.

In Abhängigkeit vom Verlauf des externen Belichtungszeitdauersignals kann die tatsächliche Belichtungszeitdauer durch die Abbildung des externen Belichtungszeitdauersignals auf den Auslesetakt auch dann schwanken, wenn die durch das externe Belichtungszeitdauersignal vorgegebene Belichtungszeitdauer gleich ist. Diese durch die in der Regel als Abtastung des Synchronisationssignals mit dem Auslesetakt bewirkte Abbildung erzeugt Belichtungszeitdauerschwankungen die man als Abtastunsicherheit bezeichnen kann. Bei periodischem externen Belichtungszeitdauersignal kann dies zu einer periodischen Änderung der Belichtungszeitdauer führen.

Diese Schwankungen in der Belichtungszeitdauer bewirken jedoch die unerwünschten Belichtungsunterschiede und beeinträchtigen damit die Bildqualität negativ. Dieser negative Einfluss wird insbesondere bei kurzen Belichtungszeitdauern in Kombination mit einem langsamen Auslesetakt deutlich. Beispielsweise haben CCD-Zeilensensoren bei langsamem Auslesetakt eine besonders hohe Bildqualität, die jedoch auch bereits geringe Änderungen in der Belichtungszeitdauer deutlich sichtbar macht. Dies kann insbesondere bei kurzen Belichtungszeitdauern zu einem deutlich sichtbaren Belichtungsunterschied zwischen einzelnen Zeilen führen. Dieser Unterschied kann beispielsweise bei einer Belichtungszeitdauer von 5 µs bei einem Auslesetakt von 10 MHz (100 ns Periodendauer) ungefähr 5 Grauwerte bei 8 Bit betragen. Dieser Unterschied ergibt sich wie folgt: Bei 10 MHz Taktfrequenz entsprechen 50 Takte einer Belichtungszeit von 5 µs. Eine Änderung um einen Takt bedeutet eine Abweichung von 2%. Bei 8 Bit Datenbreite gibt es 256 verschiedene Helligkeitsstufen. 2% x 256 = 5,12 Grauwerte Differenz bei voller Helligkeit.

Die erfindungsgemäße Lösung beruht auf der Erkenntnis, dass die durch das Abtasten des externen Signals entstehenden Belichtungszeitdauerschwankungen und die dadurch bewirkten Belichtungsunterschiede mittels einer geänderten Abbildung der Start- und Endzeitpunkte des Triggersignals unter bestimmten Bedingungen zumindest teilweise verhindert werden können. Dazu sieht die Erfindung eine Art nichtlineares Glättungsfilter vor, das auf einem Vergleich der aktuellen Belichtungszeitdauer mit einer für eine vorhergehende Belichtung ausgeführten Belichtungszeitdauer beruht. Ergibt der Vergleich eine Abweichung der beiden synchronisierten Belichtungszeitdauern in einer vorbestimmten Weise, so wird die aktuelle Belichtungszeitdauer korrigiert, d.h. verändert, um unerwünschte Belichtungszeitdauerschwankungen zu vermeiden.

Unter der aktuellen bzw. vorhergehenden Belichtungszeitdauer ist hierbei die durch die Abtastung des externen Triggersignals tatsächlich vorgegebene Belichtungsdauer zu verstehen.

Bei der Prüfung, ob die beiden Belichtungszeitdauern in einer vorbestimmten Weise voneinander abweichen, wird sichergestellt, dass es sich bei der Abweichung um eine durch die Abtastung des externen Signals mit dem Auslesetakt verursachte ungewollte Schwankung in der Belichtungszeitdauer handelt und nicht eine Belichtungszeitdauer durch das externe Signal vorgegeben wurde, die in gewollter Weise von der vorhergehenden Belichtungszeitdauer abweicht. Wenn die aktuelle und die vorhergehende Belichtungszeitdauer hingegen nicht in einer gewollten, vorbestimmten Weise voneinander abweichen, ist die Belichtungszeitdauerschwankung synchronisationsbedingt, woraufhin die aktuelle Belichtungszeitdauer durch eine andere Abbildungsregel derart korrigiert wird, dass Helligkeitsunterschiede minimiert bzw. vermieden werden.

Erfindungsgemäß erfolgt somit eine, vorzugsweise geringfügige, Manipulation und Angleichung der Belichtungszeitdauer, um durch das Abtasten des externen Signals mit dem Auslesetakt bedingte, ungewollte Schwankungen der Belichtungszeitdauer auszugleichen.

Die erfindungsgemäße Lösung hat den Vorteil, dass insbesondere bei kurzen Belichtungszeitdauern und insbesondere einem langsamen Auslesetakt die Bildqualität deutlich verbessert werden kann. Dieser Vorteil wird insbesondere beim Einsatz von CCD-Zeilensensoren deutlich, die auch geringe Änderungen in der Belichtungszeitdauer deutlich sichtbar machen und daher die erfindungsgemäße Verringerung bzw. Beseitigung dieser Belichtungszeitdauerschwankungen zu einer deutlich höheren Bildqualität gerade bei CCD-Zeilensensoren führt.

Die Erfindung wird bevorzugt dadurch fortgebildet, dass die Abbildung nach der dritten Abbildungsregel erfolgt, wenn die aktuelle Belichtungszeitdauer um weniger als einen vorbestimmten Abweichungswert von der vorhergehenden Belichtungszeitdauer abweicht.

Erfindungsgemäß wird die synchronisierte Belichtungszeitdauer mit einer vorhergehenden synchronisierten Belichtungszeitdauer vorzugsweise dahingehend verglichen, ob die Belichtungszeitdauern um einen vorbestimmten Wert oder weniger voneinander abweichen. Durch diese Vorgabe eines Abweichungswerts kann in bevorzugter Weise sichergestellt werden, dass es sich bei der Abweichung um eine ungewollte Schwankung der Belichtungszeitdauer aufgrund der Synchronisierung handelt und auch nur solche ungewollten Schwankungen der Belichtungszeitdauer erfindungsgemäß korrigiert werden. Der vorbestimmte Abweichungswert stellt dabei eine typische Grenze dar, welche unterschritten wird, wenn eine ungewollte Schwankung vorliegt. Insbesondere kann der vorbestimmte Abweichungswert auf eine typischerweise auftretende Schwankungsbreite der Belichtungszeitdauer aufgrund der Abtastunsicherheit abgestimmt sein.

Die erfindungsgemäße Korrektur der synchronisierten Belichtungszeitdauer kann auf verschiedene Arten erfolgen. Insbesondere ist es bevorzugt, wenn die zweite Belichtungszeitdauer durch eine Verkürzung oder eine Verlängerung, vorzugsweise um einen vorbestimmten Wert, korrigiert wird, wenn sie länger bzw. kürzer als die erste Belichtungszeitdauer ist. In beiden Fällen ist es bevorzugt, dass die Korrektur der zweiten synchronisierten Belichtungszeitdauer um einen vorbestimmten Verlängerungs- bzw. Verkürzungswert oder als gezielte Angleichung erfolgt. Vorzugsweise werden asymmetrische Korrekturwerte vorgegeben, die zu einem deterministischen Verhalten führen, so dass immer die kürzere bzw. immer die längere Belichtungszeitdauer gewählt wird.

Die Erfindung kann dabei weiter dadurch fortgebildet werden, dass der vorbestimmte Abweichungswert eine Anzahl von Taktdauern des Auslesetakts, vorzugsweise eine Taktdauer des Auslesetakts, beträgt. Die unerwünschte Schwankung der Belichtungszeitdauer aufgrund der Abtastung des Belichtungszeitdauersignals mit dem Auslesetakt beträgt typischerweise einen oder eine Mehrzahl von Auslesetakten. Es ist daher bevorzugt, den vorbestimmten Abweichungswert entsprechend in Auslesetakten vorzugeben, wobei ein Abweichungswert von einem Auslesetakt besonders bevorzugt ist. Auf diese Weise kann die erfindungsgemäße Belichtungszeitdauerkorrektur definiert auf ungewollte Belichtungszeitdauerschwankungen gerichtet werden. Alle Schwankungen, die sich in einer vorgegebenen Bandbreite eines oder mehrerer Auslesetakte bewegen, werden somit korrigiert.

Die Erfindung kann bevorzugt dadurch fortgebildet werden, dass die aktuelle und die vorhergehende Belichtungszeitdauer miteinander verglichen werden und
- Start- und/oder Endzeitpunkt gemäß der dritten Abbildungsregel abgebildet wird, wenn die aktuelle Belichtungszeitdauer weniger als eine Taktdauer des Auslesetakts länger als die vorhergehende Belichtungszeitdauer ist, oder
- Start- und/oder Endzeitpunkt gemäß der ersten und zweiten Abbildungsregel abgebildet wird, wenn sie kürzer oder um mehr als eine Taktdauer des Auslesetakts länger als die vorhergehende Belichtungszeitdauer ist.

Alternativ hierzu kann die aktuelle und die vorhergehende Belichtungszeitdauer miteinander verglichen werden und
- Start- und/oder Endzeitpunkt gemäß der dritten Abbildungsregel abgebildet wird, wenn die aktuelle Belichtungszeitdauer weniger als eine Taktdauer des Auslesetakts kürzer als die vorhergehende Belichtungszeitdauer ist, oder
- Start- und/oder Endzeitpunkt gemäß der ersten und zweiten Abbildungsregel abgebildet wird, wenn die aktuelle Belichtungszeitdauer länger oder um mehr als eine Taktdauer des Auslesetakts kürzer als die vorhergehende Belichtungszeitdauer ist.

Der erfindungsgemäße Vergleich der synchronisierten Belichtungszeitdauer mit einer vorhergehenden synchronisierten Belichtungszeitdauer und die erfindungsgemäße Korrektur, wenn eine Abweichung in einer vorbestimmten Weise vorliegt, ist insbesondere dann vorteilhaft, wenn andererseits gewollte Belichtungszeitdaueränderungen unverändert umgesetzt werden. Dazu wird erfindungsgemäß die aktuelle Belichtungszeitdauer beibehalten, d.h. nicht durch veränderte Abbildung korrigiert, wenn die Abweichung außerhalb des durch den vorbestimmten Abweichungswert vorgegebenen Abweichungsbereichs liegt. Damit wird sichergestellt, dass nur die in einer bestimmten Schwankungsbandbreite liegenden Abweichungen durch die erfindungsgemäße Belichtungszeitdauerkorrektur korrigiert werden. Gewollte Belichtungszeitdaueränderungen hingegen, die außerhalb der Schwankungsbreite aufgrund der Abtastunsicherheit liegen, werden nicht durch die erfindungsgemäße Korrektur beeinflusst, sondern unverändert umgesetzt werden. Dabei kann einerseits eine Angleichung der Belichtungszeitdauer in Richtung einer längeren oder in Richtung einer kürzeren Belichtungszeitdauer erfolgen.

Insbesondere ist es vorteilhaft, wenn die aktuelle Belichtungszeitdauer dann nicht korrigiert wird, wenn sie um mehr als einen Auslesetakt von der vorhergehenden Belichtungszeitdauer abweicht. Dabei kann die aktuelle Belichtungszeitdauer insbesondere dann beibehalten werden, wenn sie um mehr als einen Auslesetakt von einer vorhergehenden synchronisierten Belichtungszeitdauer abweicht. Wenn die Schwankungsbreite aufgrund der Abtastunsicherheit einen Auslesetakt beträgt, beruhen Abweichungen um mehr als einen Auslesetakt nicht auf einer Abtastunsicherheit, sondern sind gewollt und daher unverändert umzusetzen. Das erfindungsgemäße Verfahren ermöglicht es damit in vorteilhafter Weise, ungewollte Belichtungszeitdauerschwankungen zu korrigieren, während gleichzeitig gewollte Belichtungszeitdaueränderungen unverändert umgesetzt werden.

Die Erfindung kann dadurch fortgebildet werden, dass das Triggersignal um zumindest eine Taktdauer des Auslesetakts zu dem Auslesetakt der Gruppe von Bildsensoren nach hinten phasenverschoben ist. Die erfindungsgemäße Korrektur bzw. Veränderung der Belichtungszeitdauer durch geänderte Abbildung des Start- bzw. Endzeitpunktes erfolgt nach der Erfassung des externen Belichtungszeitdauersignals und nach dem Synchronisieren der Belichtungszeitdauer durch Abtasten des Triggersignals mit dem Auslesetakt. Damit vor der Belichtung der Bildsensorelemente mit der synchronisierten Belichtungszeitdauer die erfindungsgemäße Änderung der Abbildung erfolgen kann, ist es bevorzugt, die Belichtung um eine gewisse Zeit, vorzugsweise um einen Auslesetakt, zu verzögern. Dies ist insbesondere dann von Vorteil, wenn die Belichtungszeitdauer nach der Prüfung der Abweichung verkürzt werden soll.

Weitere vorteilhafte Ausführungsvarianten des erfindungsgemäßen Verfahrens ergeben sich durch Kombination der hier erörterten bevorzugten Verfahrensschritte.

Es ist weiter bevorzugt, wenn die erste und die zweite Abbildungsregel übereinstimmend sind. Weiterhin ist es bevorzugt, dass die dritte Abbildungsregel so ausgestaltet ist, dass Start- und/oder Endzeitpunkt so abgebildet werden, dass die aktuelle Belichtungszeitdauer gleich der vorhergehenden Belichtungszeitdauer gesetzt wird. Mit dieser Fortbildung wird erreicht, dass bei einer ungewollten Schwankung die bisherige Belichtungszeitdauer beibehalten wird. Dies geschieht unter der Annahme, dass eine gewollte Belichtungszeitdaueränderung stets eine bestimmte Änderungshöhe aufweist, wohingegen eine ungewollte Änderung diese Höhe nicht erreicht und dann korrigiert werden muss.

Ein weiterer Aspekt der Erfindung betrifft eine Vorrichtung der eingangs genannten Art, die dadurch gekennzeichnet ist, dass die Belichtungssteuerungsvorrichtung ausgebildet ist, eine aus der Starttaktperiode und der Endtaktperiode berechnete aktuelle Belichtungszeitdauer mit einer vorhergehenden Belichtungszeitdauer zu vergleichen und den Startzeitpunkt und/oder den Endzeitpunkt auf jeweils eine Starttaktperiode bzw. Endtaktperiode des Auslesetakts nach einer dritten Abbildungsregel abzubilden, wenn die aktuelle von der vorhergehenden Belichtungszeitdauer in einer vorbestimmten Weise, vorzugsweise um einen vorbestimmten Abweichungswert, abweicht.

Die erfindungsgemäße Vorrichtung kann fortgebildet werden nach den Ansprüchen 8 bis 12. Die Vorrichtung und ihre Fortbildungen weisen Merkmale auf, die sie insbesondere dafür geeignet machen, für ein erfindungsgemäßes Verfahren zur Belichtungssteuerung für eine zeilensequenzielle Bilderfassung eines Objekts und seine Fortbildungen verwendet zu werden. Zu den Ausführungsformen, spezifischen Merkmalen, Varianten und Vorteilen der Merkmale dieser Vorrichtung und ihrer Fortbildungen wird auf die vorangegangene Beschreibung zu den entsprechenden Verfahrensmerkmalen Bezug genommen.

Ein weiterer Aspekt der Erfindung betrifft ein Computerprogrammprodukt zur Ausführung auf einem Computer, das dadurch gekennzeichnet ist, dass es die Schritte des zuvor beschriebenen erfindungsgemäßen Verfahrens ausführt, wenn es auf einem Computer ausgeführt wird. Zu den Ausführungsformen, spezifischen Merkmalen, Varianten und Vorteilen der Merkmale dieses Computerprogrammprodukts wird ebenfalls auf die vorangegangene Beschreibung zu den entsprechenden Verfahrensmerkmalen Bezug genommen. Unter einem Computer ist in diesem Zusammenhang jede Form von programmierbaren oder programmierten elektronischen Bauelementen zu verstehen.

Bevorzugte Ausführungsformen der Erfindung wird beispielhaft anhand der beiliegenden Figuren beschrieben.

Fig. 1 zeigt ein schematisches Ablaufdiagramm einer Ausführungsform des erfindungsgemäßen Verfahrens.

Fig. 2a, b zeigen eine schematische Darstellung der Abbildung von Start- und Endzeitpunkten eines Triggersignals auf die Abtastfrequenz eines Bildsensors mit dem abtastbedingten Belichtungsfehler (a) und die Wirkungsweise der erfindungsgemäßen Belichtungssteuerung (b).

Fig. 3 zeigt ein Diagramm, welches den abtastbedingten Belichtungsfehler und den Effekt der erfindungsgemäßen Belichtungssteuerung darstellt.

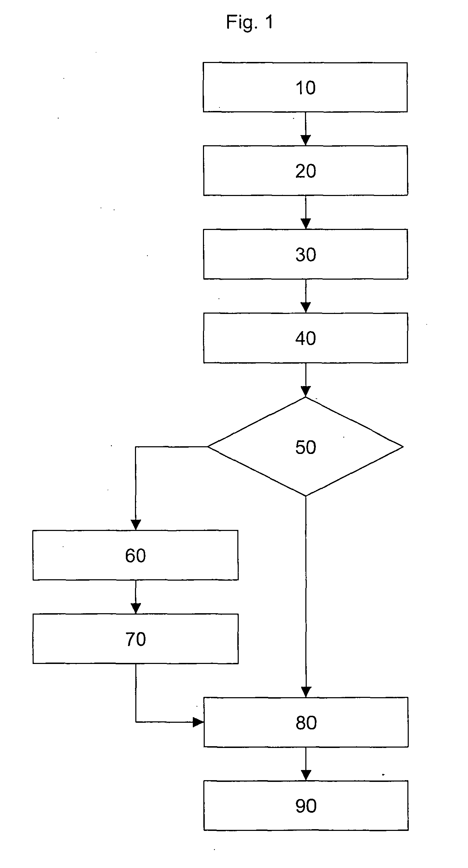

Wie aus Fig. 1 zu erkennen wird zunächst in Schritt 10 eine Bildsensorzeile mit mehreren, nebeneinander angeordneten, strahlungsempfindlichen Bildsensorelementen (Pixeln) bereitgestellt, wobei die Bildsensorelemente der zumindest einen Bildsensorzeile mit einer internen Auslesetaktfrequenz auslesbar sind.

In Schritt 20 wird ein externes Triggersignal erfasst welches eine Belichtungszeitdauer tᵢ extern vorgibt. Das externe Triggersignal dient dazu, die Belichtungssteuerung der Bildsensorzeile mit einer Relativbewegung zwischen der Bildsensorzeile und einem von dieser zu erfassenden Objekt zu synchronisieren, um die Bildsensorzeile als Zeilenkamera zu betreiben. Das Objekt kann hierdurch zeilensequentiell erfasst werden, indem unterschiedliche Objektbereiche zeitlich gestaffelt von derselben Bildsensorzeile erfasst werden.

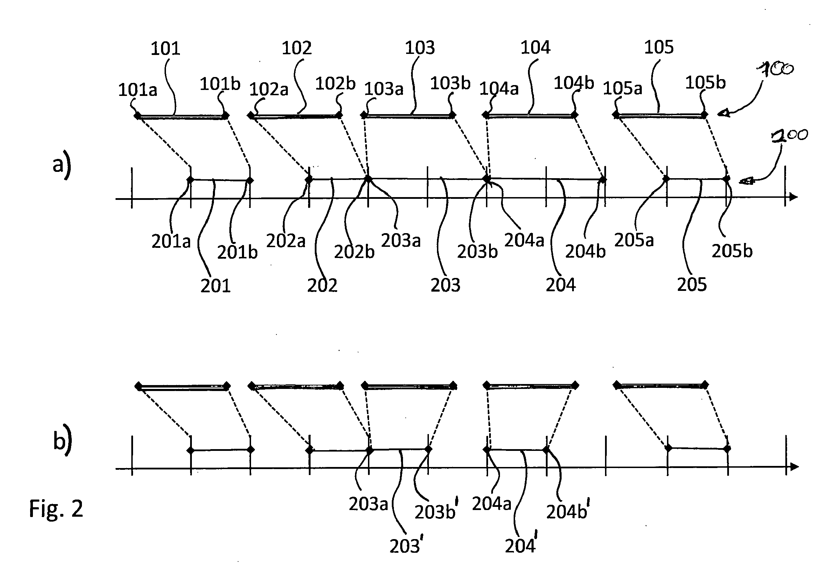

Das externe Belichtungszeitdauersignals wird mit dem Auslesetakt in Schritt 30 abgetastet und die Belichtungszeitdauer tᵢ dadurch auf den Auslesetakt abgebildet. Diese Abbildung erfolgt, wie aus Figur 2a erkennbar, nach der für sowohl einen Triggerstartzeitpunkt 101a-105a als auch den Triggerendzeitpunkt 101 b-105b angewandten Regel, dass der Triggerstartzeitpunkt bzw. Triggerendzeitpunkt auf den nächstliegenden zeitlich folgenden Taktsprung innerhalb des Auslesetakts 200 abgebildet wird, der sich somit als synchronisierter Startzeitpunkt 201a-205a bzw. Endzeitpunkt 201b-205b ergibt. Dies stellt eine Synchronisierung bzw. Quantisierung der durch das Triggersignal 100 vorgegebenen Belichtungszeitdauern tᵢ 101-105 auf synchronisierte Belichtungszeitdauern tᵢₛ 201-205 innerhalb des Auslesetakts 200 dar.

In einem nachfolgenden Schritt 40 wird die so synchronisierte Belichtungszeitdauer tᵢₛ mit einer für eine vorhergehende Belichtung synchronisierten Belichtungszeitdauer tᵢₛ₋ᵢ einer vorhergehenden Bildsensorzeile verglichen. Ergebnis dieses Vergleichs ist ein Abweichungswert Δt.

In Schritt 50 wird geprüft, ob die synchronisierte Belichtungszeit kürzer oder länger ist als diejenige der vorhergehenden Belichtung und ob der Abweichungswert Δt einen vorbestimmten Abweichungswert, hier beispielsweise einem Auslesetakt entspricht.

Wenn die Prüfung in Schritt 50 ergibt, dass die synchronisierte Belichtungszeit kürzer oder länger ist als diejenige der vorhergehenden Belichtung und dass der Abweichungswert Δt eine Taktdauer des Auslesetakts beträgt, so wird der Triggerendzeitpunkt nach einer anderen Abbildungsregel abgebildet. Die aktuelle Belichtungszeitdauer tᵢₛ ist in diesem Falle um einen Auslesetakt kürzer oder länger als eine vorherige Belichtungszeitdauer tᵢₛ₋₁, was als synchronisationsbedingter Belichtungsfehler klassifiziert wird. Der Triggerendzeitpunkt wird in diesem Fall in Schritt 60 nach der anderen Abbildungsregel solcherart um einen Auslesetakt verschoben, dass die synchronisierte Belichtungszeitdauer tᵢₛ auf den Wert der vorherigen ersten synchronisierten Belichtungszeitdauer tᵢₛ₋₁ geändert wird zu einer "korrigierten" synchronisierten Belichtungszeitdauer tᵢₛₖ. Dies ist in Figur 2a für die Belichtungszeitdauern 203 und 204 zu erkennen, die um eine Taktperiode des Auslesetakts länger sind als die jeweils vorhergehende Belichtungsdauer 202 bzw. 203. Dies wird durch eine Abbildung des Triggerendzeitpunkts 103b, 104b auf den vorhergehenden Auslesetakt 203b', 204b'korrigiert, wie aus Figur 2b zu erkennen, wodurch sich entsprechend korrigierte Belichtungszeitdauern 203'und 204'ergeben.

Wenn die Prüfung in Schritt 50 ergibt, dass der Abweichungswert Δt größer als die Taktdauer eines Auslesetakts ist und somit die synchronisierte Belichtungszeitdauer tᵢₛ insgesamt um mehr als einen Auslesetakt kürzer oder länger ist als eine vorherige erste synchronisierte Belichtungszeitdauer tᵢₛ₋₁, so wird die synchronisierte Belichtungszeitdauer tᵢₛ nicht korrigiert.

Die "korrigierte" synchronisierte Belichtungszeitdauer tᵢₛₖ und jede andere unverändert beibehaltene synchronisierte Belichtungszeitdauer tᵢₛ wird in Schritt 70 noch um einen Auslesetakt verzögert. Die Belichtung der Bildsensorelemente der Bildsensorzeile erfolgt mit den korrigierten oder unverändert beibehaltenen synchronisierten Belichtungszeitdauern tᵢₛₖ in Schritt 80.

Dies führt dazu, dass die tatsächliche Belichtungszeitdauer, die der Belichtung in Schritt 80 zugrunde gelegt wird, bei Schwankungen aufgrund der Abtastunsicherheit um eine Taktperiode oder weniger immer auf den vorherigen Wert eingestellt wird. Größere Änderungen in der Belichtungszeitdauer (in Richtung länger oder kürzer), die nicht durch die Abtastung des Belichtungszeitdauersignals mit dem Auslesetakt verursacht werden können, werden dagegen unverändert umgesetzt. Auf diese Weise wird ein deterministisches Verhalten mit einer Korrektur auf einen mittleren Grenzwert erzielt.

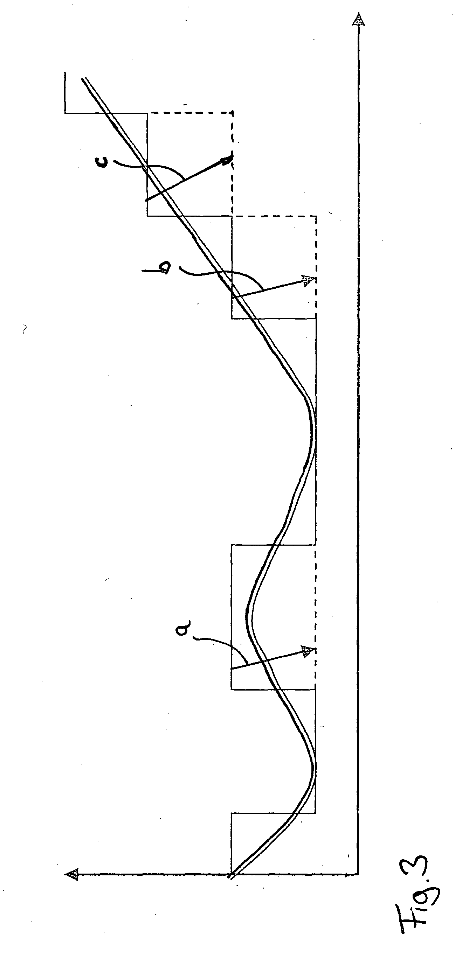

Alternativ kann vorgesehen sein, dass bei Schwankungen um eine Taktperiode oder weniger nur korrigiert wird, wenn die Belichtungszeitdauer kürzer als die vorhergehende Belichtungszeitdauer ist oder wenn die Belichtungszeitdauer länger als die vorhergehende Belichtungszeitdauer ist. Hierdurch wird ein deterministisches Verhalten mit Annäherung an eine untere oder eine obere Belichtungsdauergrenze erreicht. Figur 3 zeigt das Verhalten bei einer Korrektur eines schwankenden Belichtungswertes (doppelt durchgezogene Kurve) auf einen unteren Grenzwert innerhalb einer Abtastrate (einfach durchgezogene Linie).

In der linken Hälfte des Diagramms der Figur 3 schwankt die Belichtungszeit geringfügig um einen Mittelwert. Sobald der untere Grenzwert (gestrichelt) einmal erreicht wurde, werden alle weiteren Belichtungszeiten, sofern sie nicht mehr als eine Taktperiode länger sind als der untere Grenzwert, auf den unteren Grenzwert korrigiert (unterbrochene Linien), wie durch Pfeile a, b, c bezeichnet.

Sobald die Belichtungszeit mehr als eine Taktperiode über dem unteren Grenzwert liegt, wird die neue Belichtungszeit angenommen, weil man davon ausgehen kann, dass diese Änderung der Belichtungszeit beabsichtigt war. Der untere Grenzwert wird auf die nun aktuelle Belichtungszeit gesetzt.

Wird der untere Grenzwert unterschritten, nimmt die Kamera sofort die neue Belichtungszeit an, weil der untere Grenzwert per Definition das Minimum der periodischen Schwankung darstellt.

In Schritt 90 der Figur 1 schließlich werden die Bildsensorelemente der zumindest einen Bildsensorzeile ausgelesen.

Das dem der Ausführungsform in Fig. 1 beschriebene Verfahren zugrunde liegende Prinzip lässt sich sinngemäß auch mit der längeren Belichtungszeitdauer als dem Zielwert umsetzen, d.h. einer Verlängerung um einen Auslesetakt in Schritt 60, wenn der Abweichungswert in Schritt 50 von der vorherigen synchronisierten Belichtungszeitdauer tᵢₛ₋₁ um einen Auslesetakt nach unten abweicht. Damit tendiert die tatsächliche Belichtungszeitdauer zum oberen Endpunkt der periodischen Schwankung.

Weiterhin kann das erfindungsgemäße Prinzip beispielsweise auch mit einem größeren Abweichungswert für die Prüfung in Schritt 50 für die Annahme der neuen Belichtungszeitdauer umgesetzt werden, beispielsweise der doppelten oder dreifachen Taktperiode.

Erfindungsgemäß lassen sich durch eine entsprechende Anpassung des Filterkriteriums Abweichungswert und der Filterlogik bezüglich Verkürzung und Verlängerung um einen Verkürzungs- bzw. Verlängerungswert verschiedene Filtervarianten realisieren, z.B. kann auch die längere der beiden Belichtungszeitdauern oder auch die zuerst gemessene Belichtungszeitdauer eingestellt werden. Filterkriterien und Filterlogik können auf den jeweiligen Anwendungsfall abgestimmt werden, um eine möglichst optimale Bildqualität zu erreichen.

## Patentansprüche

1. Verfahren zur Belichtungssteuerung für eine zeilensequentielle Bilderfassung eines Objekts, mit den Schritten:
a) Bereitstellen einer Gruppe von Bildsensorelementen mit zumindest einem, vorzugsweise mehreren Bildsensorelementen,
b) Bereitstellen eines Triggersignals, welches einen Startzeitpunkt und einen Endzeitpunkt des Belichtungsvorgangs der Gruppe von Bildsensorelementen bezeichnet,
c) Bereitstellen eines Auslesetaktes, welcher eine Taktperiode definiert,
d) Abbilden des Startzeitpunkts des Triggersignals auf eine Starttaktperiode, indem der Startzeitpunkt gemäß einer ersten Abbildungsregel solcherart zeitverschoben wird, dass er mit einem Taktbeginn innerhalb des Auslesetakts zusammenfällt,
e) Abbilden des Endzeitpunkts des Triggersignals auf eine Endtaktperiode, indem der Endzeitpunkt gemäß einer zweiten Abbildungsregel solcherart zeitverschoben wird, dass er mit einem Taktende innerhalb des Auslesetakts zusammenfällt,
f) Belichten der Gruppe von Bildsensorelementen mit einer durch die zeitverschobenen Start- und Endzeitpunkte definierten aktuellen Belichtungszeitdauer,
**dadurch gekennzeichnet, dass**
g) vor der Belichtung der Gruppe von Bildsensorelementen die aktuelle Belichtungszeitdauer mit einer vorhergehenden Belichtungszeitdauer eines vorhergehenden Belichtungsvorgangs verglichen wird, und
h) der Startzeitpunkt und/oder der Endzeitpunkt des Triggersignals auf die Takte des Auslesetakts gemäß einer von der ersten bzw. zweiten verschiedenen dritten Abbildungsregel abgebildet wird/werden, wenn die aktuelle Belichtungszeitdauer von der vorhergehenden Belichtungszeitdauer in einer vorbestimmten Weise abweicht.

2. Verfahren nach dem vorhergehenden Anspruch,
**dadurch gekennzeichnet, dass** die Abbildung nach der dritten Abbildungsregel erfolgt, wenn die aktuelle Belichtungszeitdauer um weniger als einen vorbestimmten Abweichungswert von der vorhergehenden Belichtungszeitdauer abweicht.

3. Verfahren nach dem vorhergehenden Anspruch,
**dadurch gekennzeichnet, dass** der vorbestimmte Abweichungswert eine Anzahl von Taktdauern des Auslesetakts, vorzugsweise eine Taktdauer des Auslesetakts, beträgt.

4. Verfahren nach einem der vorhergehenden Ansprüche,
**dadurch gekennzeichnet, dass** die aktuelle und die vorhergehende Belichtungszeitdauer miteinander verglichen werden und
a. Start- und/oder Endzeitpunkt gemäß der dritten Abbildungsregel abgebildet wird, wenn die aktuelle Belichtungszeitdauer weniger als eine Taktdauer des Auslesetakts länger als die vorhergehende Belichtungszeitdauer ist, oder
b. Start- und/oder Endzeitpunkt gemäß der ersten und zweiten Abbildungsregel abgebildet wird, wenn sie kürzer oder um mehr als eine Taktdauer des Auslesetakts länger als die vorhergehende Belichtungszeitdauer ist.

5. Verfahren nach einem der vorhergehenden Ansprüche 1-3,
**dadurch gekennzeichnet, dass** die aktuelle und die vorhergehende Belichtungszeitdauer miteinander verglichen werden und
a. Start- und/oder Endzeitpunkt gemäß der dritten Abbildungsregel abgebildet wird, wenn die aktuelle Belichtungszeitdauer weniger als eine Taktdauer des Auslesetakts kürzer als die vorhergehende Belichtungszeitdauer ist, oder
b. Start- und/oder Endzeitpunkt gemäß der ersten und zweiten Abbildungsregel abgebildet wird, wenn die aktuelle Belichtungszeitdauer länger oder um mehr als eine Taktdauer des Auslesetakts kürzer als die vorhergehende Belichtungszeitdauer ist.

6. Verfahren nach einem der vorhergehenden Ansprüche,
**dadurch gekennzeichnet, dass** das Triggersignal um zumindest eine Taktdauer des Auslesetakts zu dem Auslesetakt der Gruppe von Bildsensoren nach hinten phasenverschoben ist.

7. Vorrichtung zur Belichtungssteuerung für eine zeilensequentielle Bilderfassung eines Objekts, umfassend
- eine Gruppe von Bildsensorelementen, umfassend zumindest ein Bildsensorelement,
- eine Auslesevorrichtung zum Auslesen der Gruppe von Bildsensorelementen mit einem Auslesetakt,
- Mittel zum Erfassen eines insbesondere externen Triggersignals, umfassend einen Startzeitpunkt und einen Endzeitpunkt,
- eine Belichtungssteuerungsvorrichtung zur Abbildung des Startzeitpunkt und des Endzeitpunkts auf jeweils eine Starttaktperiode bzw. Endtaktperiode des Auslesetakts nach einer ersten bzw. zweiten Abbildungsregel,
**dadurch gekennzeichnet, dass** die Belichtungssteuerungsvorrichtung ausgebildet ist, eine aus der Starttaktperiode und der Endtaktperiode berechnete aktuelle Belichtungszeitdauer mit einer vorhergehenden Belichtungszeitdauer zu vergleichen und den Startzeitpunkt und/oder den Endzeitpunkt auf jeweils eine Starttaktperiode bzw. Endtaktperiode des Auslesetakts nach einer dritten Abbildungsregel abzubilden, wenn die aktuelle von der vorhergehenden Belichtungszeitdauer in einer vorbestimmten Weise, vorzugsweise um einen vorbestimmten Abweichungswert, abweicht.

8. Vorrichtung nach dem vorhergehenden Anspruch,
**dadurch gekennzeichnet, dass** die Belichtungssteuerungsvorrichtung ausgebildet ist, um
a. Start- und/oder Endzeitpunkt gemäß der dritten Abbildungsregel abzubilden, wenn die aktuelle Belichtungszeitdauer weniger als eine Taktdauer des Auslesetakts länger als die vorhergehende Belichtungszeitdauer ist, oder
b. Start- und/oder Endzeitpunkt gemäß der ersten und zweiten Abbildungsregel abzubilden, wenn sie kürzer oder um mehr als eine Taktdauer des Auslesetakts länger als die vorhergehende Belichtungszeitdauer ist.

9. Vorrichtung nach dem vorhergehenden Anspruch 7,
**dadurch gekennzeichnet, dass** die Belichtungssteuerungsvorrichtung ausgebildet ist, um
a. Start- und/oder Endzeitpunkt gemäß der dritten Abbildungsregel abzubilden, wenn die aktuelle Belichtungszeitdauer weniger als eine Taktdauer des Auslesetakts kürzer als die vorhergehende Belichtungszeitdauer ist, oder
b. Start- und/oder Endzeitpunkt gemäß der ersten und zweiten Abbildungsregel abzubilden, wenn die aktuelle Belichtungszeitdauer länger oder um mehr als eine Taktdauer des Auslesetakts kürzer als die vorhergehende Belichtungszeitdauer ist.

10. Vorrichtung nach einem der vorhergehenden Ansprüche 7-9,
**dadurch gekennzeichnet, dass** die Belichtungssteuerungsvorrichtung ausgebildet ist, um den Startzeitpunkt und/oder den Endzeitpunkt nach der dritten Abbildungsregel abzubilden, wenn die aktuelle Belichtungszeitdauer um weniger als einen vorbestimmten Abweichungswert von der vorhergehenden Belichtungszeitdauer abweicht.

11. Vorrichtung nach einem der vorhergehenden Ansprüche 7 bis 10,
**dadurch gekennzeichnet, dass** der vorbestimmte Abweichungswert eine Anzahl von Taktdauern des Auslesetakts, vorzugsweise eine Taktdauer des Auslesetakts, beträgt

12. Vorrichtung nach einem der vorhergehenden Ansprüche 7 bis 11, die Belichtungssteuerungsvorrichtung ausgebildet ist, um den Startzeitpunkt und/oder den Endzeitpunkt nach der dritten Abbildungsregel um zumindest eine Taktdauer des Auslesetakts der Gruppe von Bildsensoren nach hinten phasenverschoben abzubilden.

13. Verfahren oder Vorrichtung nach einem der vorhergehenden Ansprüche,
**dadurch gekennzeichnet, dass** erste und die zweite Abbildungsregel übereinstimmend sind.

14. Verfahren oder Vorrichtung nach einem der vorhergehenden Ansprüche,
**dadurch gekennzeichnet, dass** die dritte Abbildungsregel so ausgestaltet ist, dass Start- und/oder Endzeitpunkt so abgebildet werden, dass die aktuelle Belichtungszeitdauer gleich der vorhergehenden Belichtungszeitdauer gesetzt wird.

15. Computerprogrammprodukt zur Ausführung auf einem Computer, **dadurch gekennzeichnet, dass** es die Schritte des Verfahrens nach einem der vorhergehenden Ansprüche 1-6, 13, 14 ausführt, wenn es auf einem Computer ausgeführt wird.
